# EUROPÄISCHE PATENTSCHRIFT

(11) **EP 0 532 851 B1**
(45) Veröffentlichungstag und Bekanntmachung des Hinweises auf die Patenterteilung: **24.05.1995**
(21) Anmeldenummer: 92111601.8
(22) Anmeldetag: 08.07.1992
(51) Int. Cl.: B64G 1/50, F28D 5/00

(54) **Verdampfungswärmetauscher**
Evaporative heat exchanger
Echangeur de chaleur à évaporation

(30) Priorität: 14.09.1991 DE 4130694; 14.01.1992 DE 4200688
(43) Veröffentlichungstag der Anmeldung: 24.03.1993
(73) Patentinhaber: Daimler-Benz Aerospace Aktiengesellschaft, 80995 München (DE)
(72) Erfinder: Leidinger, Bernhard, Prof. Dr., W-2803 Weyhe-Leeste (DE)
(74) Vertreter: Hansmann, Dierk, Dipl.-Ing.

(56) Entgegenhaltungen:
- DE-C- 3 718 873
- FR-A- 1 039 271
- US-A- 2 200 442
- US-A- 4 648 355
- US-A- 4 738 304

## Beschreibung

Die Erfindung betrifft ein Verfahren gemäß dem Oberbegriff des Patentanspruchs 1 sowie eine Vorrichtung zur Durchführung eines solchen Verfahrens.

Bei Raumfahrzeugen, die sich in der Auf- oder Abstiegsphase durch die Erdatmosphäre befinden oder die in der Erdumlaufbahn extremen thermischen Belastungen ausgesetzt sind, gilt es, die entstehende Wärme sicher und zuverlässig abzuführen. Zu diesem Zweck werden unter anderem Verdampfungswärmetauscher eingesetzt.

Grundlegendes Verfahrensprinzip derartiger Wärmetauscher ist es, daß das zu kühlende Medium eines aktiven Flüssigkeitskreislaufes zur Wärmeabfuhr mit einem zu verdampfenden Medium in wärmeübertragenden Kontakt gebracht wird, welches in einem mitgeführten Vorratsbehälter gelagert ist und das anschließend in Form von Dampf vom Raumfahrzeug in die Umgebung abgelassen wird.

Um das zu verdampfende Medium durch eine möglichst vollständige Verdampfung optimal auszunutzen, ist es dabei wichtig, einen möglichst guten thermischen Kontakt und damit einen möglichst vollständigen Wärmeübergang zwischen der Kühlflüssigkeit einerseits und dem zu verdampfenden Medium andererseits sicherzustellen.

Bei einer bekannten Gattung von Wärmetauschern, wie sie beispielsweise in der DE-PS 37 18 873 beschrieben ist, strömt die Kühlflüssigkeit über einzelne Kanäle durch einen Prozeßraum, in den das zu verdampfende Medium über ein Einlaßventil tröpfchenförmig eingesprüht wird. Bei einer zweiten Gattung von Verdampfungswärmetauschern fließt hingegen die Kühlflüssigkeit offen durch den Prozeßraum, während das zu verdampfende Medium durch einzelne, in der Regel bündelartig angeordnete Kanäle durch diesen Raum geleitet wird. Die Kühlflüssigkeit wird dabei zusätzlich durch im Prozeßraum angeordnete Blenden zu einem mäanderförmigen Strömungsverlauf gezwungen.

Ein Verdampfungswärmetauscher dieser letztgenannten Art ist in der Druckschrift M. Bottacini, A. Moscatelli und C. Ferro: "HERMES Thermal Control Design and Architecture", 21st. ICES-Conference, 1991, SAE 911 499, S. 12 beschrieben. Bei diesem bekannten Wärmetauscher besteht eine Anforderung darin, daß, unabhängig von der jeweils abzuführenden Wärmelast, die im in der Druckschrift beschriebenen Fall zwischen 30 und 100 % der Maximallast variieren kann, die Austrittstemperatur des Flüssigkeitskühlkreislaufes, der im in diesem Fall aus einer Wasserströmung besteht, konstant 6°C beträgt.

Als zu verdampfendes Medium ist bei diesem bekannten Wärmetauscher flüssiges Ammoniak (NH₃) gewählt, das aus einem entsprechenden Vorratsbehälter über ein Einspritzsystem in den Verdampfer geleitet und nach der Verdampfung in die Umgebung abgeblasen wird. Die Temperatur des Ammoniaks beträgt im Vorratsbehälter zwischen 0 und 70°C, der Druck entspricht entweder dem Sättigungsdruck oder wird durch Beaufschlagung des Tanks mit Stickstoff- oder Heliumgas erhöht.

Bei der Einspeisung des flüssigen Ammoniaks in den Verdampfer wird der Druck drastisch abgesenkt. Direkt hinter dem Einspritzventil wird daher bereits so viel Ammoniak verdampft, wie benötigt wird, um die eingespeiste Flüssigkeit auf die hinter dem Ventil gültige Sättigungstemperatur zu bringen. Diese ist eine Funktion des Drucks im Verdampfer.

Ohne besondere technische Einrichtung hängt der Druck im Verdampfer nur vom Absolutdruck der Umgebung, in die das verdampfte Ammoniak geleitet wird, vom Druckverlust des durch den Auslaßkanal strömenden Ammoniak-Massenstroms und gegebenenfalls von Drucksprüngen an Schallzerschnitten im Auslaßkanal ab.

Die bei der adiabaten Verdampfung entstehende Ammoniaktemperatur m uß, damit Wärme aus dem Kühlflüssigkeitskreislauf aufgenommen werden kann, immer kälter als die Wassertemperatur sein. Sie darf aber unter keinen Umständen so niedrig sein, daß in der Grenzschicht der Wasserströmung lokale Vereisung auftritt.

Da derartige Wärmetauscher sowohl in Vakuumumgebung (bzw. etwa 600 Pa) als auch bei Normatmosphärendruck (101.3 kPa) arbeiten sollen, und da aufgrund des breiten Lastspektrums verschieden große Ammoniak-Dampfströme generiert werden, variiert der Verdampfungsdruck und damit auch die Verdampfungstemperatur last- und missionsabhängig: bei Vollast liegt die größte und bei Teillast die kleinste Verdampfungstemperatur vor.

Zur Regelung des Ammoniak-Verdampfungsdrucks und der Temperatur wird in der genannten Literaturstelle vorgeschlagen, auf der Eintrittsseite des zu verdampfenden Mediums ein Vordruckregelventil vorzusehen und damit den Druck im Verdampfungsraum unabhängig vom generierten Dampfmassenstrom und zugleich unabhängig vom Druck der Umgebung konstant zu halten. Da es sich bei einem solchen Ventil um ein mechanisches Bauteil handelt, bei dem ein Versagen nie vollständig auszuschließen ist, müßte in diesem Fall aus Gründen der Redundanz wenigstens ein weiteres Ventil vorgesehen werden bzw. ein zusätzlicher paralleler Strang mit noch zwei weiteren Ventilen. Eine solche , aus insgesamt vier Ventilen bestehende Anordnung aber bedeutet einen wesentlichen Mehraufwand an Masse und Volumen sowie zusätzliche Kosten.

Aufgabe der Erfindung ist es, ein Verfahren gemäß dem Gattungsbegriff so auszubilden, daß es auf einfache Weise und ohne zusätzliche mechanische Elemente möglich ist, die Verdampfungstemperatur des zu verdampfenden Mediums last- und gegendruckunabhängig einerseits so niedrig zu halten, daß stets die erforderliche Menge an Wärme abgeführt werden kann, sie andererseits aber so hoch zu halten, daß an der Grenzschicht zwischen der Kühlflüssigkeit und den das zu verdampfende Medium enthaltenden Bauteilen jede Vereisungsgefahr vermieden wird. Weitere Aufgabe der Erfindung ist es, eine Vorrichtung zur Durchführung eines solchen Verfahrens bereitzustellen.

Die Erfindung löst die erste Aufgabe durch ein Verfahren mit den kennzeichnenden Merkmalen des Patentanspruchs 1, bei dem der Verdampfungswärmetauscher in wenigstens zwei räumlich getrennte Stufen mit unterschiedlichen Druck- und Temperaturbedingungen und daraus resultierenden unterschiedlichen Lastspektren aufgeteilt ist und bei dem das zu verdampfende Medium und die Kühlflüssigkeit diese Stufen in entgegengesetzter Reihenfolge durchströmen. Das bedeutet, daß das zu verdampfende Medium zunächst in die Stufe gelangt, in der die Kühlflüssigkeit ihre letzte Abkühlung erfährt und zuletzt durch die Stufe strömt, in der die Kühlflüssigkeit erstmalig gekühlt wird.

Zwar ist bereits aus der US-A-4 648 355 ein stufenförmig gestalteter Wärmetauscher bekanntgeworden, der zur Abscheidung eines Kondensats dient und bei dem zum Zweck der Vergrößerung der wärmeübertragenden Oberflächen und der Effektivität mehrere gleichartig aufgebaute Komponenten hintereinander geschaltet sind. Dieser bekannte Wärmetauscher, der nicht der Gattung der Verdampfungswärmetauscher zuzurechnen ist, ist dabei so ausgelegt, daß die einzelnen Stufen von Dampf unterschiedlichen Energieinhalts beaufschlagt werden können, wobei dieser Dampf kondensiert und anschließend als Kühlflüssigkeit eingesetzt wird.

Als zu verdampfendes Medium wird bei dem Verfahren nach der Erfindung in vorteilhafter Weise flüssiger Ammoniak oder Wasserstoff (H₂) verwendet, während sich als Kühlflüssigkeit Wasser als vorteilhaft erwiesen hat. Bei speziellen Missionsanforderungen ist es in Verbindung mit dem erfindungsgemäßen Verfahren darüber hinaus besonders vorteilhaft, wenn die Druck- und Temperaturbedingungen so gewählt werden, daß in einer der Stufen, vorzugsweise in der Austrittsstufe für die Kühlflüssigkeit, das zu verdampfende Medium nur teilweise verdampft.
Zur Lösung der weiteren Aufgabe ist erfindungsgemäß ein Verdampfungswärmetauscher mit den kennzeichnenden Merkmalen des Patentanspruchs 8 vorgesehen.

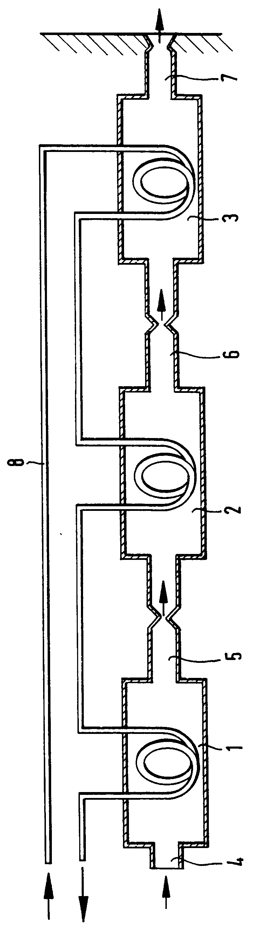

Im folgenden soll die Erfindung anhand eines in der Zeichnung dargestellten Ausführungsbeispiels näher erläutert werden, wobei die Zahlenangaben hier als ungefähre Richtwerte anzusehen sind.

Die Figur zeigt eine Prinzipskizze eines mehrstufig, im vorliegenden Fall dreistufig aufgebauten Verdampfungswärmetauschers. Die Stufen bestehen aus drei voneinander getrennten Kammern 1 bis 3, die in einem gemeinsamen Rahmen angeordnet sind, der in der Figur jedoch nicht dargestellt ist. Die einzelnen Kammern können dabei so aufgebaut sein, wie in der eingangs genannten Literaturstelle beschrieben ist. Dementsprechend sind in den zylindrischen Kammern 1 bis 3 jeweils Bündel von in Längsrichtung verlaufenden Röhrchen angeordnet, durch die das zu verdampfende Medium, im vorliegenden Fall Ammoniak, hindurchfließt und die von der Kühlflüssigkeit, bei dem hier beschriebenen Ausführungsbeispiel Wasser, umspült werden.

Das zu verdampfende Medium wird über ein Einlaßventil 4 in die Kammer 1 der ersten Stufe des Wärmetauschers eingesprüht, strömt durch diese Kammer 1 hindurch und über eine Verbindungsleitung 5 in die die zweite Stufe bildende Kammer 2. Von hier gelangt es über eine zweite Verbindungsleitung 6 in die letzte Stufe, d.h. in die Kammer 3 und von dieser über einen Auslaß 7 schließlich, vollständig in Dampf überführt, ins Freie.

Die Kühlflüssigkeit, deren Strömungspfad durch einen durchgehenden, mit dem Bezugszeichen 8 gekennzeichneten Kurvenzug dargestellt ist, wird im Bereich des Auslasses 7 in die zur dritten Stufe gehörende Kammer 3 eingespeist. In dieser umspült sie die das zu verdampfende Medium enthaltenden Röhrchen und gelangt über eine Verbindungsleitung als nächstes in die Kammer 2 und schließlich in die Kammer 1, von wo aus sie, auf die gewünschte Temperatur heruntergekühlt, wieder an die zu kühlenden Komponenten des Raumfahrzeuges zurückgeleitet wird. Das die Kühlflüssigkeit aufnehmende Rohrleitungssystem ist dabei aus Gründen der besseren Übersicht nicht mit in die Figur eingezeichnet worden.

Geht man von der Annahme aus, daß die in die Kammer 3 eintretende Kühlflüssigkeit eine Temperatur zwischen 24 und 65°C aufweist und daß sie die Kammer 1 mit einer Temperatur von 6°C verlassen soll, so lassen sich die für diese Abkühlung erforderlichen Werte des Ammoniakdrucks in etwa aus der Dampfdruckkurve abschätzen, wenn man weiterhin annimmt, daß die Temperatur des Ammoniaks stets unterhalb der der zu kühlenden Kühlflüssigkeit liegen muß. Für die erste Stufe ergibt sich dabei ein Druck zwischen 355 kPa und etwa 516 kPa. Da dieses Druckniveau deutlich oberhalb des maximalen Umgebungsdrucks liegt, ist es vorteilhaft, zur Regelung im Bereich der Verbindungsleitung 5 eine Schallblende einzusetzen und an dieser Stelle einen etwa konstanten Volumenstrom des zu verdampfenden Mediums vorzusehen. Dies bedeutet andererseits, daß hier stets die gleiche Wärmemenge übertragen wird, weshalb diese erste Stufe für die kleinste Teillast ausgelegt ist, mit einer Eintrittstemperatur der Kühlflüssigkeit von etwa 24°C.

Für die zweite Stufe, in der demzufolge nur Wassertemperaturen oberhalb 24°C vorliegen, ergibt sich aus ähnlichen Überlegungen eine maximale Temperatur der Kühlflüssigkeit von 35°C und ein Minimaldruck für das zu verdampfende Medium von etwa 160 kPa. Damit der Druck in der ersten Stufe nicht oberhalb 516 kPa liegt, darf der Druck in der zweiten Stufe maximal etwa 280 kPa betragen.

In der dritten und letzten Stufe schließlich, vor der eine weitere Schallblende vorgesehen ist, wird die Kühlflüssigkeit von ihrer Eintrittstemperatur von maximal 65°C auf etwa 35°C heruntergekühlt, woraus sich für das zu verdampfende Medium ein Druck im Bereich zwischen etwa 47 und 150 kPa errechnet.

Diese Zahlenwerte wurden unter der Annahme abgeschätzt, daß der Wärmeübergangsbeiwert auf der Seite der Kühlflüssigkeit etwa gleich groß wie auf der Seite des zu verdampfenden Mediums ist. Bei Annahme besonders günstiger Verhältnisse zeigt sich, daß zum Erreichen der geforderte Funktion eines derartigen Verdampfungswärmetauschers, nämlich Abkühlung der Kühlflüssigkeit auf eine konstante Temperatur von 6°C und vollständige Überführung des zu verdampfenden Mediums in die Dampfphase, auch ein zweistufiger Aufbau ausreichend sein kann, der selbstverständlich auch innerhalb des Rahmens der Erfindung liegt.

## Patentansprüche

1. Verfahren zum Abführen von Wärme in Raumfahrzeugen unter Schwerelosigkeit sowie bei unterschiedlichen Beschleunigungen, bei dem in einem Prozeßraum eine zu wenigstens einem aktiven Flüssigkeitskühlkreislauf gehörende Kühlflüssigkeit sowie ein zu verdampfendes Medium in thermischen Kontakt gebracht werden, in dessen Folge Wärme an das zu verdampfende Medium übertragen und anschließend in Form von Dampf an die Umgebung des Raumfahrzeuges abgegeben wird, dadurch gekennzeichnet, daß der wärmeübertragende Kontakt in wenigstens zwei räumlich voneinander getrennten Bereichen (1,2,3) erfolgt, in denen unterschiedliche Druck- und Temperaturbedingungen eingestellt sind, und daß die Kühlflüssigkeit und das zu verdampfende Medium so durch die einzelnen Stufen (1,2,3) geführt werden, daß die Kühlflüssigkeit zunächst die Stufe (3) mit der höchsten Temperatur und dem niedrigstens Druck des zu verdampfenden Mediums durchströmt und nachfolgend die Stufen (2,3) mit sukzessiv abnehmender Temperatur und zunehmendem Druck des zu verdampfenden Mediums.

2. Verfahren nach Anspruch 1, dadurch gekennzeichnet, daß die Kühlflüssigkeit aus Wasser besteht.

3. Verfahren nach einem der Ansprüche 1 oder 2, dadurch gekennzeichnet, daß das zu verdampfende Medium aus Ammoniak (NH₃) besteht.

4. Verfahren nach einem der Ansprüche 1 bis 3, dadurch gekennzeichnet, daß die Druck- und Temperaturbedingungen sowie das zu verdampfende Medium so gewählt sind, daß in einer der Stufen (1,2,3) lediglich eine teilweise Verdampfung des zu verdampfenden Mediums erfolgt.

5. Verfahren nach Anspruch 4, dadurch gekennzeichnet, daß das zu verdampfende Medium aus flüssigem Wasserstoff (H₂) besteht.

6. Verfahren nach einem der Ansprüche 1 bis 5, dadurch gekennzeichnet, daß innerhalb der einzelnen Stufen (1,2,3) die Hauptströmungsrichtung der Kühlflüssigkeit der Strömungsrichtung des zu verdampfenden Mediums im wesentlichen entgegengerichtet ist.

7. Verfahren nach einem der Ansprüche 1 bis 5, dadurch gekennzeichnet, daß innerhalb der einzelnen Stufen (1,2,3) die Hauptströmungsrichtung der Kühlflüssigkeit der Strömungsrichtung des zu verdampfenden Mediums im wesentlichen gleichgerichtet ist.

8. Vorrichtung zur Durchführung des Verfahrens nach einem der Ansprüche 1 bis 7 in Form eines Verdampfungswärmetauschers mit wenigstens einem aktiven Flüssigkeitskühlkreislauf, bei dem ein Prozeßraum von der zu kühlenden Flüssigkeit und von dem zu verdampfenden Medium durchströmt wird, dadurch gekennzeichnet, daß der Prozeßraum aus wenigstens zwei voneinander getrennten Stufen (1,2,3) besteht und daS in diesen Stufen (1,2,3) unterschiedliche Druck- und Temperaturbedingungen vorliegen und die jeweils über Verbindungsleitungen (5,6) miteinander verbunden sind.

9. Vorrichtung nach Anspruch 8, dadurch gekennzeichnet, daß in den Verbindungsleitungen (5,6) zwischen den einzelnen Stufen (1,2,3) wenigstens eine Schallblende vorgesehen ist.

10. Vorrichtung nach Anspruch 8 oder 9, dadurch gekennzeichnet, daß das zu verdampfende Medium über Röhrchen durch die die einzelnen Stufen bildenden Kammern (1 bis 3) geleitet wird und daß die Röhrchen von der Kühlflüssigkeit umströmt werden.

## Claims

1. Method of dissipating heat in space vehicles under zero-gravity conditions and at different rates of acceleration, whereby in a process chamber a cooling liquid of at least one active liquid cooling cycle as well as a medium for evaporation are brought into thermal contact, as a result of which heat is transferred to the medium for evaporation and then released in the form of vapour into the surroundings of the space vehicle characterized in that the heat-transferring contact is effected in at least two spatially separated regions (1, 2, 3) in which differing pressure and temperature conditions are set, and that the cooling liquid and the medium for evaporation are conveyed through the individual stages (1, 2, 3) in such a way that the cooling liquid flows first through the stage (3) having the highest temperature and the lowest pressure of the medium for evaporation and then through the stages (2, 3) having a successively decreasing temperature and increasing pressure of the medium for evaporation.

2. Method according to claim 1, characterized in that the cooling liquid consists of water.

3. Method according to one of claims 1 or 2, characterized in that the medium for evaporation consists of ammonia (NH3).

4. Method according to one of claims 1 to 3, characterized in that the pressure and temperature conditions as well as the medium for evaporation are so selected that in one of the stages (1, 2, 3) only a partial evaporation of the medium for evaporation is effected.

5. Method according to claim 4, characterized in that the medium for evaporation consists of liquid hydrogen (H2).

6. Method according to one of claims 1 to 5, characterized in that inside the individual stages (1, 2, 3) the main flow direction of the cooling liquid is substantially opposite to the flow direction of the medium for evaporation.

7. Method according to one of claims 1 to 5, characterized in that inside the individual stages (1, 2, 3) the main flow direction of the cooling liquid is substantially identical to the flow direction of the medium for evaporation.

8. Device for effecting the method according to one of claims 1 to 7 in the form of an evaporation heat exchanger having at least one active liquid cooling circuit in which the liquid to be cooled and the medium for evaporation flow through a process chamber, characterized in that the process chamber consists of at least two separate stages (1, 2,3) and that differing pressure and temperature conditions prevail in said stages (1, 2, 3) and said stages are in each case connected to one another by connection lines (5, 6).

9. Device according to claim 8, characterized in that at least one sound baffle is provided in the connection lines (5, 6) between the individual stages (1, 2, 3).

10. Device according to claim 8 or 9, characterized in that the medium for evaporation is directed by means of tubes through the chambers (1 to 3) forming the individual stages and that the cooling liquid flows around the tubes.

## Revendications

1. Procédé pour évacuer la chaleur d'engins spatiaux en apesanteur soumis à des accélérations variables, selon lequel, dans une enceinte de procédé, on place un liquide appartenant au moins à un circuit actif de liquide de refroidissement ainsi ou'un fluide à évaporer, mis en contact thermique et qui transmet la chaleur au fluide à évaporer puis est fourni sous la forme de vapeur à l'environnement de l'engin spatial, caractérisé en ce que le contact de transfert de chaleur se fait dans au moins deux zones (1, 2, 3) séparées l'une de l'autre dans l'espace, et dans lesquelles sont réglées des conditions de pression et de température différentes, le liquide de refroidissement et le fluide à évaporer sont conduits à travers les différentes étapes (1, 2, 3) et le liquide de refroidissement parcourt tout d'abord l'étape (3) correspondant à la température la plus élevée et à la pression la plus basse du fluide à évaporer puis les étapes suivantes (2, 3) à température successivement diminuée et à pression augmentée pour le fluide à évaporer.

2. Procédé selon la revendication 1, caractérisé en ce que le liquide de refroidissement est de l'eau.

3. Procédé selon l'une des revendications 1 ou 2, caractérisé en ce que le fluide à évaporer comprend de l'ammoniac (NH₃).

4. Procédé selon l'une des revendications 1 à 3, caractérisé en ce que les conditions de pression et de température ainsi que le fluide à évaporer sont choisis pour qu'il n'y ait qu'une évaporation partielle du fluide à évaporer dans l'une des étapes (1, 2, 3).

5. Procédé selon la revendication 4, caractérisé en ce que le fluide à évaporer est de l'hydrogène liquide (H₂).

6. Procédé selon l'une des revendications 1 à 5, caractérisé en ce que dans les différentes étapes (1, 2, 3), la direction principale de circulation du liquide de refroidissement est opposée principalement à la direction d'écoulement du fluide à évaporer.

7. Procédé selon l'une des revendications 1 à 5, caractérisé en ce qu'à l'intérieur des différentes étapes (1, 2, 3), la direction d'écoulement principal du liquide de refroidissement est essentiellement de même sens que la direction d'écoulement du fluide à évaporer.

8. Dispositif pour la mise en oeuvre du procédé selon l'une des revendications 1 à 7 sous la forme d'un échangeur de chaleur par évaporation ayant au moins un circuit actif de liquide de refroidissement, selon lequel une enceinte de procédé est parcourue par le liquide à refroidir et par le fluide à évaporer, caractérisé en ce que l'enceinte de procédé se compose d'au moins deux étapes séparées l'une de l'autre (1, 2, 3) et dans ces étapes (1, 2, 3) il y a des conditions de pression et de température différentes et ces étapes sont reliées par des conduites de liaison (5, 6).

9. Dispositif selon la revendication 8, caractérisé en ce qu'il est prévu au moins un diaphragme phonique dans les conduites de liaison (5, 6) entre les différentes étapes (1, 2, 3).

10. Dispositif selon la revendication 8 ou 9, caractérisé en ce que le fluide à évaporer est conduit par des petits tubes à travers les chambres correspondant aux différentes étapes (1-3) et en ce que le liquide de refroidissement circule autour des petits tubes.
